# EUROPEAN PATENT SPECIFICATION

(11) **EP 1 881 420 B1**
(45) Date of publication and mention of the grant of the patent: **12.11.2008**
(21) Application number: 06117325.8
(22) Date of filing: 17.07.2006
(51) Int. Cl.: G06F 17/30

(54) **Mark Up Language Based Database Upgrades**
Auszeichnungssprache-basierte Datenbank-Aktualisierung
Mise à jour de base de données basée sur un langage de balisage

(43) Date of publication of application: 23.01.2008
(73) Proprietor: Nextair Corporation, Waterloo, ON N2L 3W8 (CA)
(72) Inventor: Neil, Tim, Mississauga Ontario L5M 7H2 (CA); Neil, Scott, Toronto Ontario M5V 3R7 (CA); Grenier, Steve, Georgetown Ontario L7G 5V7 (CA)
(74) Representative: Rickard, David John

(56) References cited:
- WO-A-20/04077312
- US-A1- 2002 112 224
- US-A1- 2005 091 231
- US-A1- 2005 149 582
- US-A1- 2006 036 661

## Description

The present disclosure relates to databases, and more particularly to markup language based database upgrades.

Databases are commonly used to store data on various types of computing devices, such a personal computers, servers, mainframe computers or portable computing devices (e.g. wireless communication devices). A database may for example define tables having fields (columns) for storing data of various types. Within these tables, data may be stored in the form of records (rows). A database may contain more than one table.

From time to time, a database may need to be upgraded. For instance, the release of a new version of a software application which stores its data in the database may require the database to be upgraded. Upgrading may involve the definition of new tables, deletion or renaming of existing tables, or updating existing tables with new, deleted or renamed fields.

A markup language based solution for upgrading a database would be desirable.

US-A-2005/0149582 discloses a database migration framework that allows schema definitions and incremental migrations to be pushed out to target local computers. In one example, the framework comprises an XML-based framework enclosing scripted instructions for database updates. The instructions themselves are in the form of embedded script such as SQL or Java and each framework is therefore designed to operate on a particular operating platform.

In one aspect of the present invention, there is provided a method of performing a database upgrade at a computing device having installed database upgrade software and a database management system, comprising: determining a current version of a database; inputting to the database upgrade software one or more markup language documents containing a plurality of markup language portions, each said markup language portion describing a set of changes to the database for upgrading the database from a starting version to a subsequent version; selecting one of the markup language portions for implementation based on said determining; and executing the database upgrade software to make appropriate calls to database management system for implementing the set of changes to the database described by the selected markup language portion, wherein each markup language portion comprises a set of markup language elements, the set of elements including at least one instruction element representing a change to be made to said database, said instruction element including an action attribute indicating the type of change.

In another aspect of the below-described embodiment, there is provided a machine-readable medium comprising: machine-executable code for causing a computing device to perform the method described above.

In yet another aspect of the below-described embodiment, there is provided a computing device comprising: at least one processor; and memory coupled to the at least one processor storing: machine-executable code for causing said computing device to perform the method described above.

### GENERAL

### BRIEF DESCRIPTION OF THE DRAWINGS

In the figures which illustrate example embodiments of this disclosure:

FIG. 1 is a schematic diagram illustrating a wireless communication device storing a database to be upgraded;

FIG. 2 is a diagram illustrating a first incremental upgrade to the database maintained by the wireless communication device of FIG. 1;

FIG. 3 is a diagram illustrating a second incremental upgrade to the database maintained by the wireless communication device of FIG. 1;

FIG. 4 is a textual representation of an Extensible Markup Language (XML) document which forms the basis of an upgrade to the database of FIGS. 2 and 3;

FIG. 5 is a schematic diagram illustrating a set of objects instantiated by database upgrade software in the volatile memory of the wireless communication device of FIG. 1; and

FIGS. 6, 7, 8A-8B and 9A-9B are pseudo-code representations of four object oriented classes from which the set of objects of FIG. 5 are instantiated.

### DESCRIPTION OF PREFERRED EMBODIMENTS

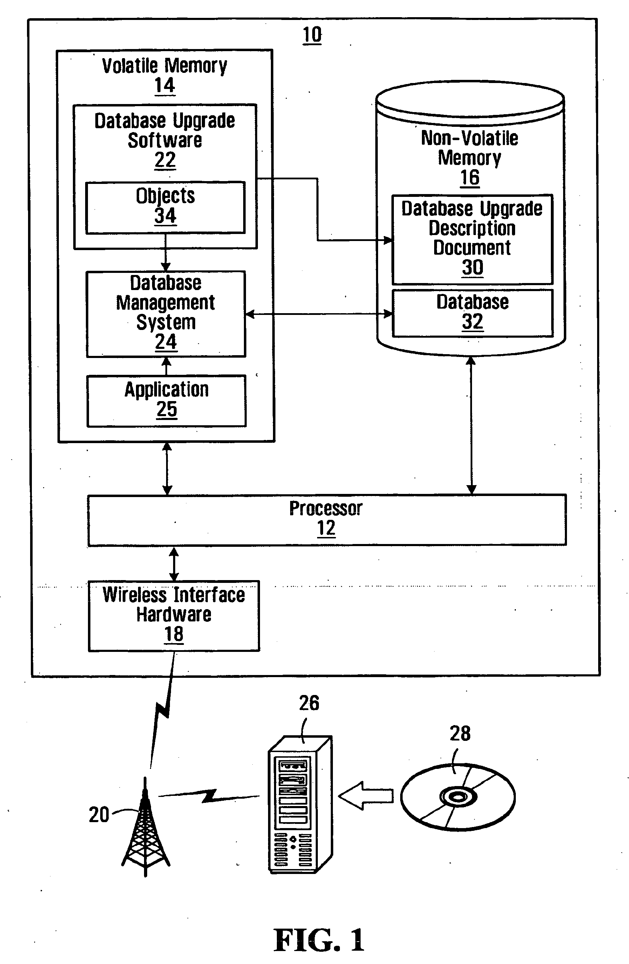

FIG. 1 illustrates a computing device 10 exemplary of an embodiment of the present disclosure. In particular, computing device 10 is a wireless communication device, such as a Research in Motion (RIM) two-way paging device, a WinCE based device, a PalmOS device, a WAP enabled mobile telephone, or the like. The computing device 10 includes a processor 12, volatile memory 14 and non-volatile memory 16. The device 10 also includes wireless interface hardware 18 for to transmitting and receiving data over a wireless network 20. The processor 12, volatile memory 14, non-volatile memory 16 and wireless interface hardware may be conventional components forming part of a commercially-available wireless communication device 10.

Volatile memory 14 stores three executable computer programs, namely database upgrade software 22, database management system 24 and software application 25.

Database upgrade software 22 is responsible for upgrading a database 32 stored in non-volatile memory 16, and is a focus of the present description. As will be described, the database upgrade software 22 takes as its input a markup language database upgrade description document 30 which governs the behavior of the software 22 when performing a database upgrade. During the course of a database upgrade, database upgrade software 22 instantiates various objects 34 (i.e. instances of object oriented classes) for the purpose of effecting the upgrade, as will be described.

Database management system (DBMS) 24 is a conventional DBMS which facilitates access to and manipulation of data stored in database 32. Commercially available database management systems that may be used on wireless communication devices include Sybase^{™}, Microsoft® Pocket Access, Microsoft® SQLCE, Oracle, and J2ME MIDP storage. For example, DBMS 24 may be capable of executing queries (such as structured query language (SQL) queries) for extracting desired records from tables within the database 32. Alternatively DBMS 24 could be a proprietary DBMS which provides application programming interfaces (APIs) for accessing or manipulating data in database 32. In either case, the DBMS 24 is utilized by database upgrade software 22 (and, more specifically, by objects 34) for the purpose of effecting database upgrades, as will be described.

Software application 25 is a computer program which stores data in database 32 via DBMS 24. Application 25 may be virtually any type of program capable of storing, accessing and manipulating data in a database. In the present embodiment, it is assumed that software application 25 has recently been upgraded from an initially released version 1.0 to a current version 1.2 (with an intermediate version 1.1 being skipped) and that the new version of application 25 now requires data stored in database 32 to be upgraded from an original version 1.0 to a subsequent, desired version 1.2.

Each of the database upgrades software 22, DBMS 24 and software application 25 may be downloaded from a server 26 via wireless network 20. The executable programs may have been loaded to server 26 from a machine-readable medium such as an optical disk 28. Alternatively, the programs could be loaded directly to memory 14 from a machine-readable medium. Each of these computer programs 22, 24 and 25 comprises machine-executable code (e.g. machine code or byte code), and are thus capable of execution by the computing device 10, either alone or in conjunction with other programs such as a "virtual machine" execution environment (e.g. Java^{™} virtual machine or .NET compact framework) for example.

Non-volatile memory 16 stores database upgrade description document 30 and database 32.

Database upgrade description document 30 is a markup language document that is read by the database upgrade software 22 prior to its execution of a database upgrade. Document 30 may be thought of as a "plug-in" to the database upgrade software 22 which determines the substance of the database upgrade to be performed. In the present embodiment, the database upgrade description document 30 is an Extensible Markup Language (XML) document, a form of markup language document that is well known in the art. The XML may for example be formed in accordance with the Extensible Markup Language (XML) 1.0 (Third Edition) W3C Recommendation dated 04 February 2004, which is provided at www.w3.org/TR/2004/REC-xml-20040204/. As will be described, the document 30 contains a hierarchy of XML elements with attributes describing a series of incremental upgrades which may be performed to database 32. An incremental upgrade refers to a database upgrade between consecutive database versions (e.g., a change between consecutive database versions 1.0 and 1.1) as distinguished from a change spanning multiple database versions (e.g., version 1.0 to, say, version 1.2, skipping version 1.1). Each incremental upgrade of the present embodiment describes changes to one or more database tables and their subordinate fields. Database upgrade description document 30 is described in more detail below.

Database 32 comprises one or more files storing data in the form of tables containing records (rows) with user-defined fields (columns). Each field has a type (e.g. integer, string, date, and the like). The database 32 may be a relational database, but this is not a requirement.

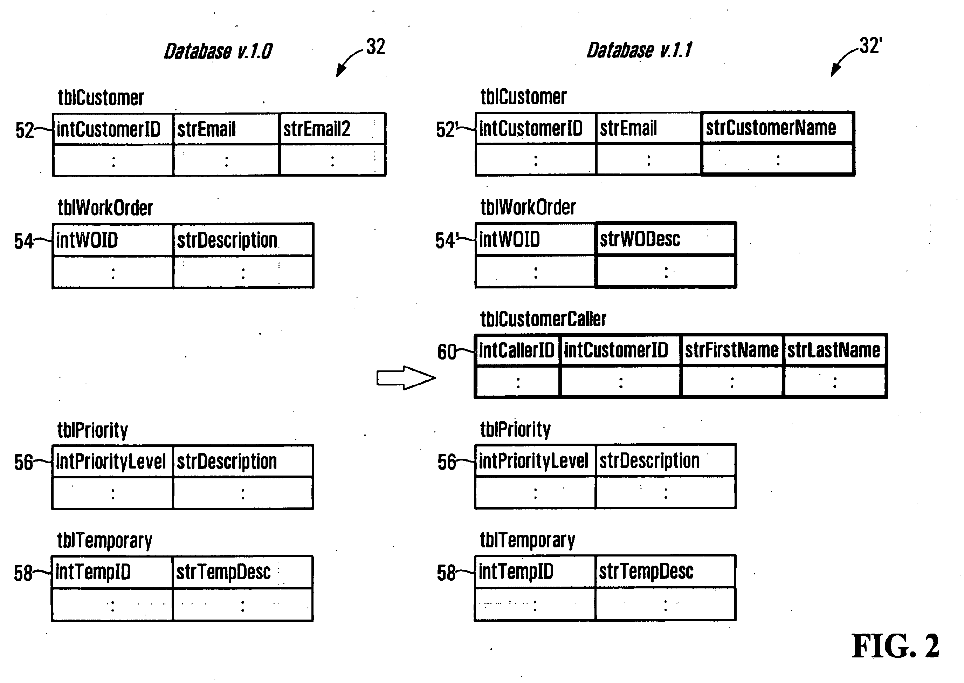

FIG. 2 illustrates the database 32 of FIG. 1 in greater detail. The illustrated database 32 is an initial version 1.0 of the database, and may thus be referred to as the "original database". Also illustrated in FIG. 2 is a subsequent version 1.1 of the same database, denoted by reference numeral 32'. Database 32' is illustrated in order to illustrate the nature of the incremental upgrade that is necessary to upgrade a database version 1.0 to a database version 1.1.

As illustrated, original database 32 has four tables 52, 54, 56 and 58 named tblCustomer, tblWorkOrder, tblPriority and tblTemporary, respectively. Each table defines a number of fields. For example, the tblCustomer table 52 defines three fields named intCustomerID, strEmail and strEmail2. The type of each field is indicated by the field name prefix ("int" indicating integer and "str" indicating string). All of the tables 52, 54, 56 and 58 are assumed to store data (not expressly illustrated).

As shown in FIG. 2, in order to convert the original database 32 to database 32' (i.e. to change database version 1.0 to version 1.1), it is necessary to update some of the database's tables and to add a new table. In particular, the field strEmail2 should be deleted, and a new field, strCustomerName, should be defined. This will result in modified table 52' in database version 1.1. Moreover, the strDescription field in table 54 should be renamed strWOdesc. This will result in a modified table 54'. Finally, a wholly new table 60, tblCustomerCaller, should be added, with fields intCallerID, intCustomerID, strFirstName and strLastname. In FIG. 2, new or updated fields are indicated using bold text.

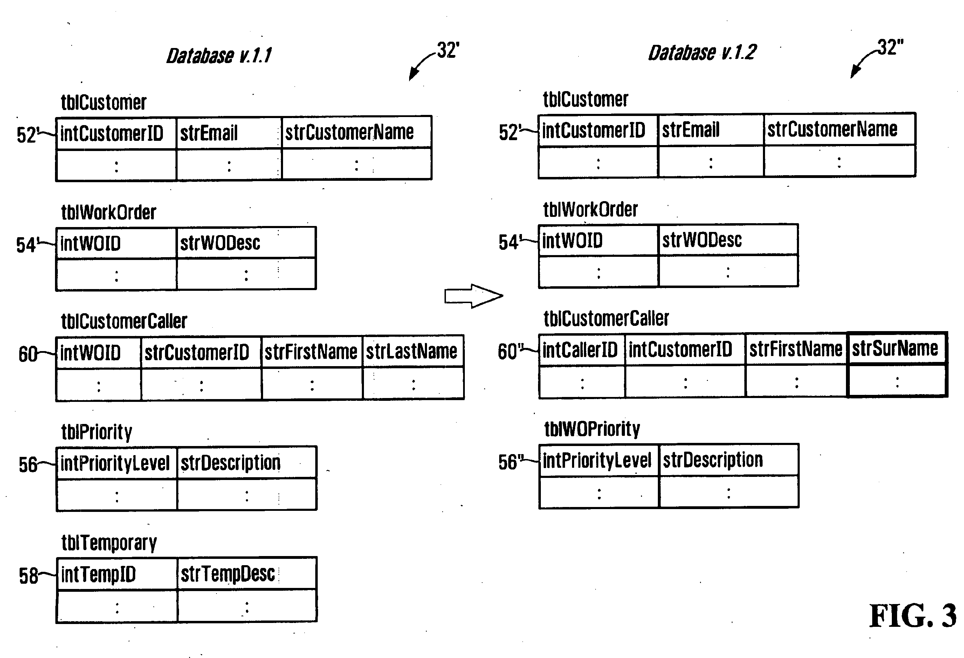

FIG. 3 illustrates a further incremental upgrade that is necessary to further upgrade the database 32' (version 1.1) to a database 32" (database version 1.2). Specifically, the field strLastName of table 60 is renamed to strSurName to result in table 60", table 56 is renamed from tblPriority to tblWOPriority to become table 56", and 58, tblTemporary, is deleted. Again, new or updated fields as indicated in bold text.

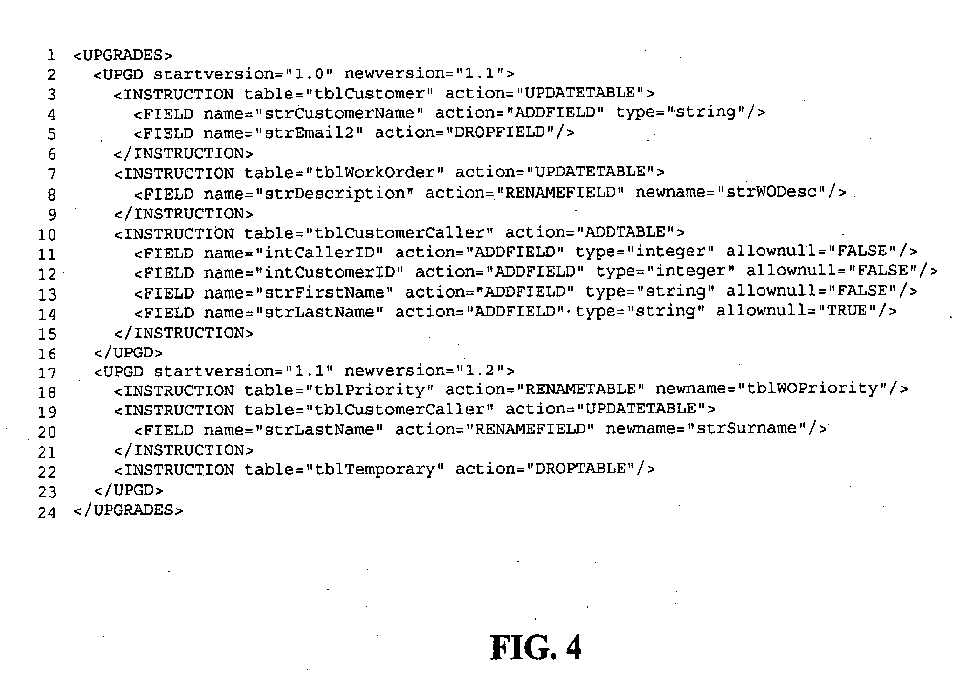

FIG. 4 illustrates the database upgrade description document 30 of FIG. 1 in greater detail. It should be appreciated that the XML text of FIG. 1 may be an excerpt of a larger overall XML document. That is, in FIG. 1, only the XML elements and attributes that are pertinent to the present description of database upgrade operation are illustrated.

As shown in FIG. 4, the document 30 defines a hierarchy of instances of four XML elements: UPGRADES, UPGD, INSTRUCTION and FIELD. In overview, the UPGRADES element acts as a container or "parent element" for the other XML elements; the UPGD element represents a single incremental database upgrade and contains one or more INSTRUCTION elements; the INSTRUCTION element represents a particular type of change to be made to a named table as part of an incremental upgrade and contains zero or more FIELD elements; and the FIELD element represents a particular type of change to be made to a named field in the context of a change to a named table. Each element in the above list is subordinate to (i.e. can only exist in document 30 as a child or other descendent of) the preceding element.

In the present embodiment, all possible database table changes are grouped into four categories of "actions": (1) ADD TABLE; (2) DROP TABLE; (3) RENAME TABLE; and (4) UPDATE TABLE. The ADD TABLE action adds a table to the database. The DROP TABLE action deletes an existing table from a database. The RENAME TABLE action assigns a new name to an existing database table. Finally, the UPDATE TABLE action modifies an existing database table in some way. The latter action includes the addition of new fields to the table or the renaming or deleting of existing fields. As will be appreciated, the INSTRUCTION and FIELD elements are used in combination to represent all of the different types of database changes possible in the present embodiment.

In FIG. 4, the outermost UPGRADES element contains two UPGD elements. For clarity, a "contained" XML element (also referred to as a "subordinate" XML element or, in the case of a direct relationship with the containing element as in the present example, a "child" XML element) is indented in FIG. 4 in relation to the containing XML element ("ancestor" or, in the case of a direct relationship with the child as in this example, "parent" XML element). The first UPGD element at lines 2-16 corresponds to the first incremental upgrade (version 1.0 to version 1.1) illustrated in FIG. 2, while the second UPGD element at lines 17-23 corresponds to the second incremental upgrade (version 1.1 to version 1.2) illustrated in FIG. 3. For each UPGD element, attributes "startversion" and "newversion" identify the starting version and ending version for the described upgrade. Thus the document 30 of FIG. 4 contains two hierarchies of markup language elements (one at lines 2-16, the other at lines 17-23), each describing a set of changes to be made to the database in order to effect an incremental upgrade from a starting database version to a subsequent database version. Each hierarchy forms a portion (or "markup language portion") of the overall markup language document 30.

The UPGD elements each contain at least one INSTRUCTION element. An INSTRUCTION element represents a constituent step for effecting the incremental upgrade represented by the containing UPGD element. To effect a particular incremental upgrade, the INSTRUCTION elements are "executed" in sequence, as will be described. Each INSTRUCTION element represents one of the four above-described types of changes to a named table. The type of change is indicated by the "action" attribute of the INSTRUCTION element. The affected table is identified by the "table" attribute. Each of the four categories of changes is represented in FIG. 4. Specifically, an ADD TABLE INSTRUCTION is illustrated at lines 10-15; a DROP TABLE INSTRUCTION is illustrated at line 22; a RENAME TABLE INSTRUCTION is illustrated at line 18; and an UPDATE TABLE INSTRUCTION is illustrated at lines 3-6. The RENAME TABLE INSTRUCTION has an additional attribute, "newname", which specifies the desired new table name.

One or more FIELD elements may be contained by an INSTRUCTION element. A FIELD element represents a particular type of change to be made to a named field in the context of the table change represented by the containing INSTRUCTION element. There are three types of changes that can be made to a field: (a) ADD FIELD, where a new field with a specified name and type is added to a table; (b) DROP FIELD, where a specified field is deleted from the table; or (c) RENAME FIELD, where a specified field is renamed. For all three types of changes, the type of change is indicated by the "action" attribute and the name of the impacted field is specified in a "name" attribute. For an ADD FIELD action, the type of the new field is specified in a "type" attribute and an optional "allownull" boolean attribute specifies whether the field can have a null value. For a RENAME FIELD action, a new name for the field is specified in a "newname" attribute of the FIELD element.

In the description which follows, use of the database upgrade software 22 of FIG. 1 and database upgrade description document 30 of FIG. 4 for upgrading database 32 (version 1.0) to database 32" (version 1.2) will be described.

In operation, when database upgrade software 22 of FIG. 1 is invoked, it initially reads the database upgrade description document 30 of FIG. 4. An XML parser may initially be used to convert document 30 to a Document Object Model (DOM) tree representation. A DOM tree is essentially a dynamically-accessible representation of an XML document that is well understood in the art (DOM trees are described at www.w3.org/DOM/ for example). The entire DOM tree may then be traversed. For each XML element that is encountered during the traversal, a corresponding object is instantiated from one of a set of object oriented classes, described below, forming part of software 22. As will be appreciated, instantiation of each object may be facilitated by a fromXML() "constructor" method within the class, which populates the object's data members based on XML element and attribute values. For example, the constructor method may receive the XML fragment which defines the XML element and, based on element and attribute values within the fragment, automatically populate the newly-instantiated object's data members with like values. It is noted that the constructor method may or may not meet the strict definition the term "constructor" as it is understood in the context of certain object-oriented programming languages (e.g. the method may not have the same name as the class). In the result, a hierarchy of objects 34 which correlates to the XML element hierarchy of the database upgrade description document 30 is instantiated in volatile memory 14.

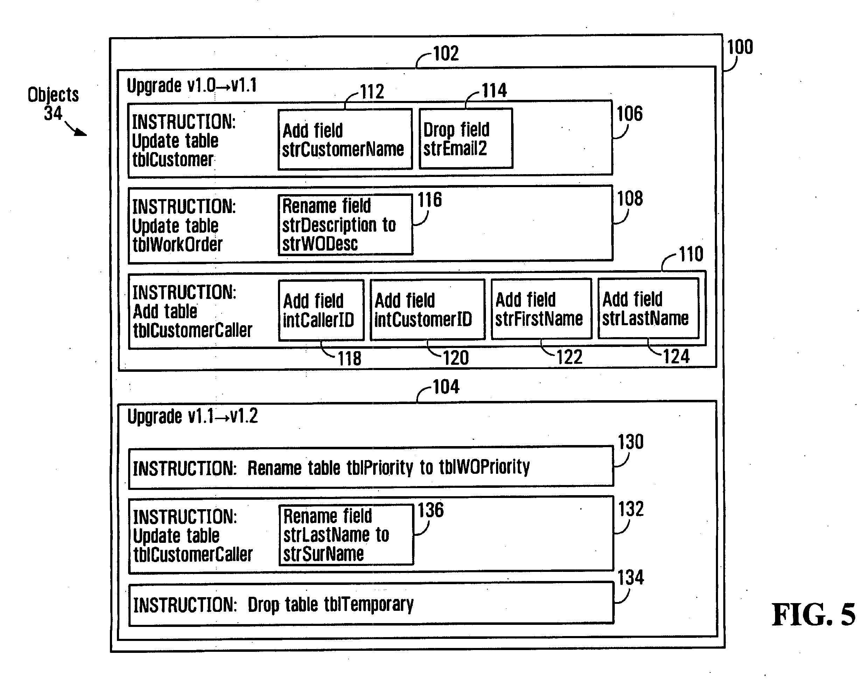

FIG. 5 illustrates the hierarchy of objects 34. Each box illustrated in FIG. 5 represents an instance of an object oriented class (i.e. an "object"). Illustration of an object within the border of another object connotes the latter object's containment of the former. In the present embodiment a contained object is a data member of the containing object. Most of the objects shown in FIG. 5 are labelled with descriptive text to facilitate comprehension of the aspect of the database upgrade that is represented by the object. It will be appreciated that this text is not part of the objects 34.

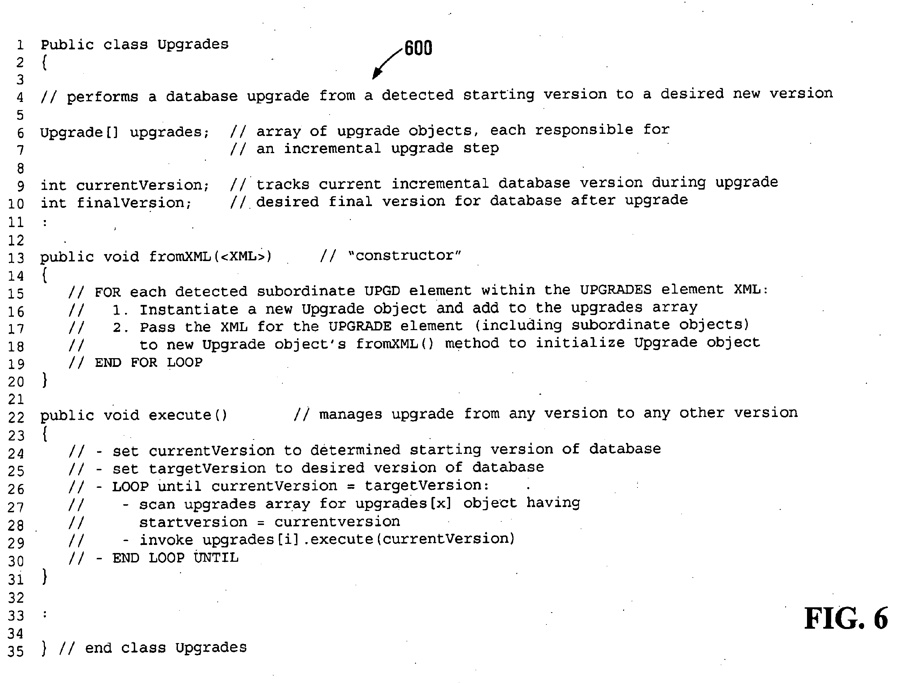

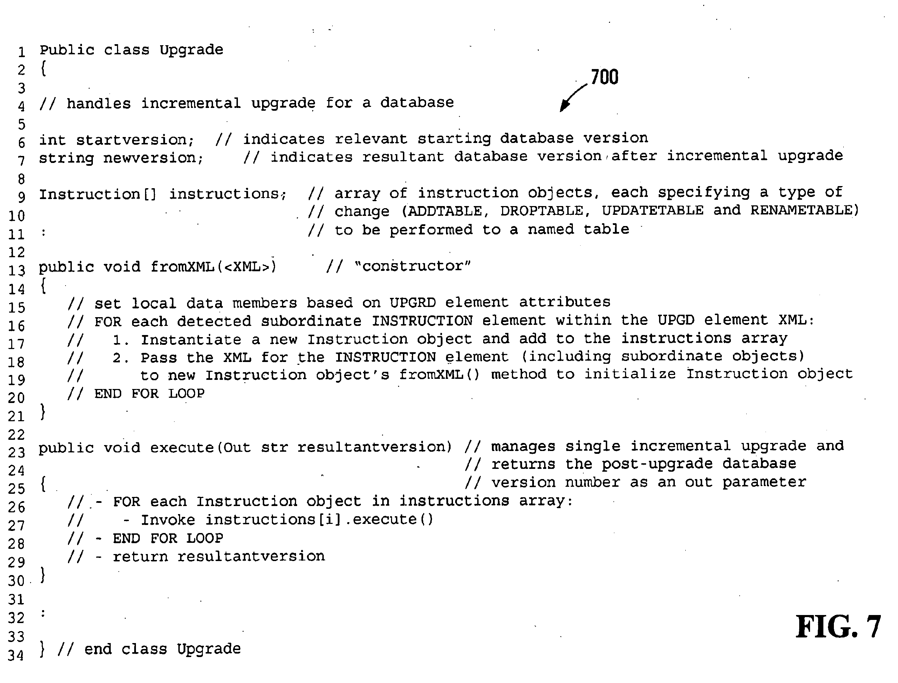

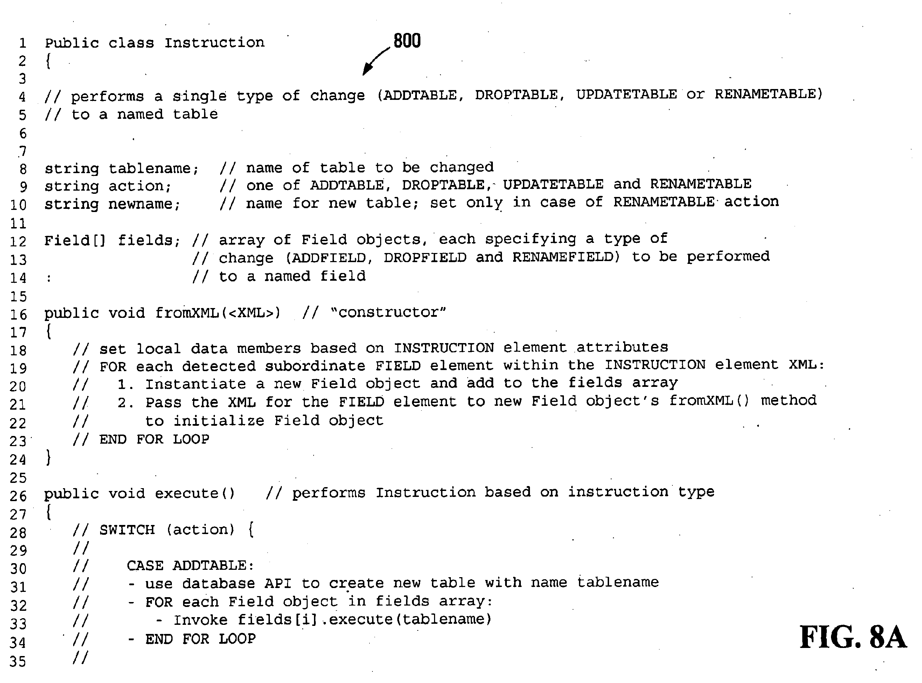

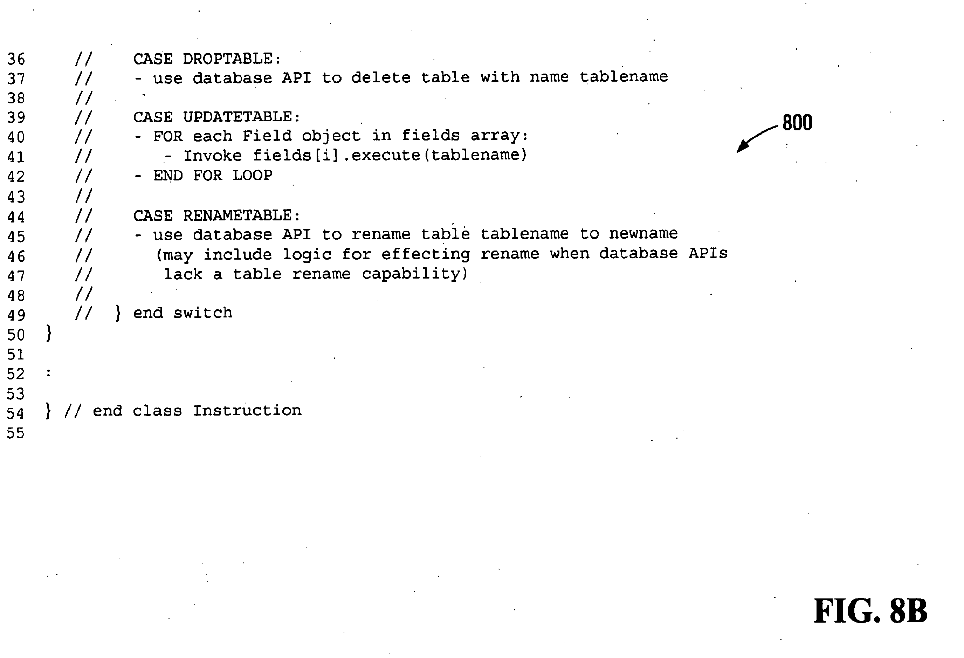

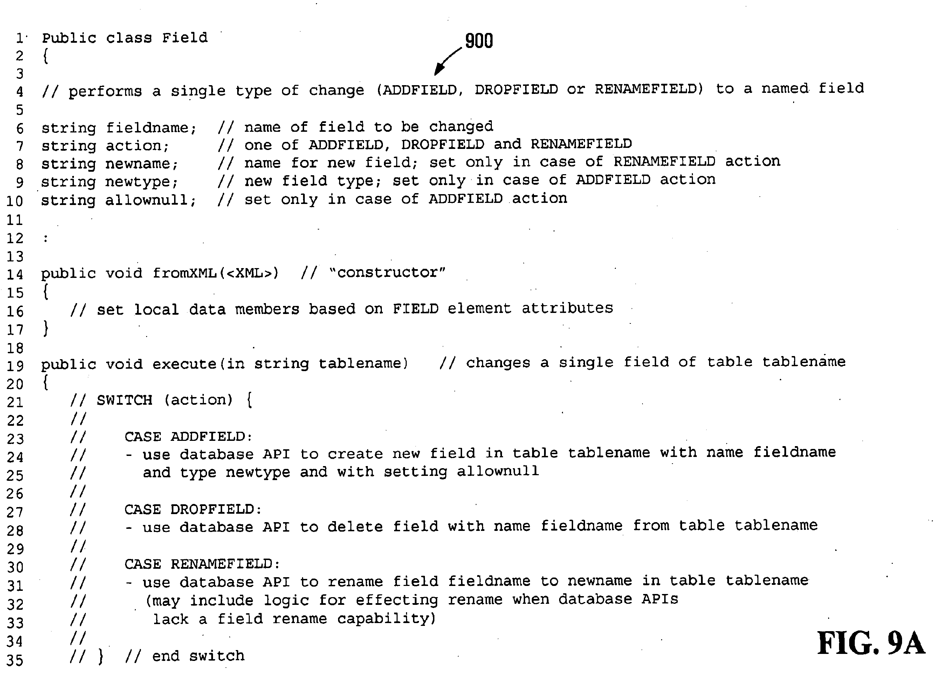

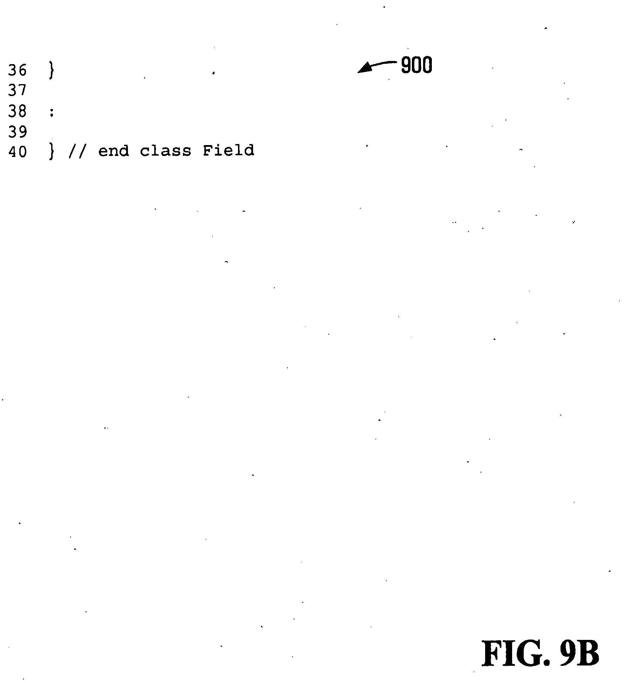

The outermost object of the hierarchy of objects 34 is an instance 100 of an Upgrades class 600 (illustrated in FIG. 6, described below) which corresponds to the UPGRADES XML element at lines 1-24 of FIG. 4. The Upgrades object 100 contains two instances 102 and 104 of an Upgrade class 700, each representing an incremental database upgrade. The Upgrade class 700 is illustrated in FIG. 7 (described below). Upgrade object 102 corresponds to the first XML element UPGD at lines 2-16 of FIG. 4 while object 104 corresponds to the second XML element UPGD at lines 17-23 of FIG. 4. Each of the Upgrade objects 102 and 104 contains three Instruction objects 106, 108, 110 and 130, 132 and 134, respectively. Each Instruction object is instantiated from the Instruction class 800 of FIGS. 8A-8B (described below). The six instruction objects correspond to the six INSTRUCTION elements of FIG. 4. Finally, contained within various ones of the Instruction objects are Field objects 112, 114, 116, 118, 120, 122, 124 and 136. These are instantiated from the Field class 900 of FIG. 9A-9B and correspond to the eight XML FIELD elements of FIG. 4.

As should be appreciated from the following description of classes 600, 700, 800 and 900, instantiation of the hierarchy of objects 34 is performed in a "top-down" fashion.

Referring to FIG. 6, the Upgrades class 600 is illustrated in pseudo-code form. In FIG. 6, comments are preceded by a "//" delimiter (this is also true in FIGS. 7, 8A-8B, and 9A-9B). The Upgrades class 600 effectively "oversees" a database upgrade from a starting version (e.g. v1.0) to a final version (e.g. v1.2). The upgrade may require the sequential execution of multiple incremental upgrades (e.g. v.1.0 to 1.1, followed by v1.1 to v1.2). When the database upgrade software 22 encounters the UPGRADES element of the document 30, an instance 100 of the Upgrades class is instantiated, and its fromXML() method (shown at FIG. 6, lines 13-20) is invoked. The fromXML method takes in an XML UPGRADES Element, denoted by <XML>, complete with subordinate elements (i.e. XML corresponding to all 24 lines of FIG. 4). This XML Element may be a member of a DOM tree of the XML parser that parses the XML representing the upgrades. The fromXML method is then able to access attributes and child elements of the DOM Element. For each subordinate UPGD element found within the portion of XML, the fromXML() method: (1) instantiates a new Upgrade object from class 700 and adds it to its upgrades array (declared at lines 6-7 of FIG. 6), and (2) passes the XML for the UPGD element, including subordinate objects, to the fromXML() method of the newly declared Upgrade object.

Referring to FIG. 7, the Upgrade class 700 is illustrated in pseudo-code form. The Upgrade class 700 handles a single incremental database upgrade (e.g. v.1.0 to 1.1, or v1.1 to v1.2). When an Upgrade object's fromXML() method (shown at FIG. 7, lines 13-21) is invoked by the parent Upgrades object, local data members startversion and newversion (lines 6-7 of FIG. 7) are initially set to the attribute values of the same name from the UPGD element XML that is passed as an input parameter. Thereafter, for each subordinate INSTRUCTION element contained by the UPGD element, the fromXML() method: (1) instantiates a new Instruction object from class 800 and adds it to its instructions array (declared at lines 9-10 of FIG. 7), and (2) passes the XML for the INSTRUCTION element, including subordinate objects, to the fromXML() method of the newly declared Instruction object.

Referring now to FIGS. 8A-8B, the Instruction class 800 is illustrated in pseudo-code form. The Instruction class 800 performs a single type of change (ADD TABLE, DROP TABLE, RENAME TABLE or UPDATE TABLE) to a named database table. When an Instruction object's fromXML() method (shown at FIG. 8A, lines 16-24) is invoked by the parent Upgrade object, local data members tablename and action (lines 8-9) are initially set to the values of attributes "table" and "action" from the INSTRUCTION element XML that is passed as an input parameter (if the action type is RENAME TABLE, the "newname" data member is also set to its corresponding XML attribute value). Thereafter, for each subordinate FIELD element contained by the INSTRUCTION element, the fromXML() method: (1) instantiates a new Field object from class 900 and adds it to its fields array (declared at lines 12-13 of FIG. 8A), and (2) passes the XML for the FIELD element to the fromXML() method of the newly declared Field object.

Referring to FIGS. 9A-9B, the Field class 900 is illustrated in pseudo-code form. The Field class 900 performs a single type of change (ADD FIELD, DROP FIELD, or RENAME FIELD) to a named field of a database table. When a Field object's fromXML() method (shown at FIG. 9A, lines 14-17) is invoked by the parent Instruction object, local data members "fieldname" and "action" (lines 6-7) are set to the values of attributes "name" and "action" of the FIELD element that is passed as an input parameter. If the action type is RENAME FIELD, there is a further setting of a "newname" data member (line 8) to the value of an attribute of the same name, while if the action type is ADD FIELD, there is a further setting of "newtype" and "allownull" data members (line 9-10) to the values of attributes of the same name.

Once the above-described "cascade" of invocations of fromXML() methods through the various instances of classes 600, 700, 800 and 900 has successfully completed, the result is a hierarchical set of objects 34 as shown in FIG. 5.

At this stage, the execute() method of the "parent" Upgrades object 100 is invoked. This method, which is illustrated at lines 22-31 of FIG. 6, effectively manages a database upgrade from any starting version to any final version. As will be appreciated, the invocation of the execute() method results in similar "cascade" of method invocations in subordinate objects of the hierarchy of objects 34, which cumulatively result in the desired database upgrade.

Initially, the execute() method sets the current Version and final Version data members to the current database version and desired final database version respectively. The current database version may be determined simply by reading a "current version" field of the database. The desired final version may for example be obtained from a configuration setting that may be set when the new version of application 25 of FIG. 1 is downloaded to the wireless communication device 10 (the upgrade of the application 25 being the trigger for the upgrade of database 32 in this example). The variables, current Version and finalVersion are assumed to be 1.0 and 1.2 respectively in this embodiment.

Thereafter, the execute() method enters a loop whose termination condition is attainment of the desired database version. Within the loop, the execute() method scans the upgrades array for an Upgrade object (i.e. instance of an Upgrade class 700 of FIG. 7) having a startversion value which matches the current Version value of 1.0. In most embodiments, there should only be one Upgrade object meeting this condition (but this is not a requirement). In this embodiment, Upgrade object 102 meets the condition. The execute() method of the identified Upgrade object 102 is therefore invoked.

The invoked execute() method, which is illustrated at lines 23-29 of FIG. 7, effects a single incremental database upgrade. To effect the upgrade, the method invokes the execute() method of each Instruction object (i.e. each instance of Instruction class 800) in its instructions array in turn. For example, in the case of Upgrade object 102, the method invokes the execute() method of each of Instruction objects 106, 108 and 110. The execute() method of the Upgrade class 700 takes a single out parameter "resultantVersion" for returning a value that indicates the resulting database version (v1.1 in this example).

Referring to FIGS. 8A-8B, the execute() method of the Instruction class 800 is illustrated at lines 26-50. This execute() method is responsible for effecting a single type of change (ADD TABLE, DROP TABLE, UPDATE TABLE or RENAME TABLE, as indicated by the action data member) to a named database table. The actions performed by the execute() method in order to achieve this objective depend upon the type of change to be made. For this reason, the body of the execute() method contains a switch statement which causes a different logic branch to be executed based on the value of the action data member.

In the case of an ADD TABLE action, one or more appropriate API calls are made to DBMS 24 or commands sent to DBMS 24 for causing a new table with a name matching the value of the data member tablename to be created in the database. Then, to add fields to the newly created table, the execute() method of each Field object (i.e. each instance of Field class 900) of the fields array is invoked in turn, with the tablename data member being passed as an input parameter. For example, in the case of Instruction object 110, the execute() method of each of Field objects 118, 120, 122 and 124 (see FIG. 5) are invoked in turn with the input parameter "tblCustomerCaller".

In the case of a DROP TABLE action, one or more appropriate API calls are made to DBMS 24 or commands sent to DBMS 24 for causing the table with name matching the tablename data member value to be deleted from the database. This action would be taken by Instruction object 134 for example to cause the table named "tblTemporary" to be dropped.

In the case of an UPDATE TABLE action, the execute() method of each Field object of the fields array is invoked in turn, again with the tablename data member being passed as an input parameter, in order to add, drop or rename one or more fields of the table. For example, in the case of Instruction object 106, the execute() method of Field objects 112 and 114 are invoked with the input parameter "tb1Customer".

In the case of a RENAME TABLE action, one or more appropriate API calls are made to DBMS 24 or commands sent to DBMS 24 for causing the table whose name matches the tablename data member value to be renamed to the value of the newname data member. This action would be taken by Instruction object 130 for example in to rename table "tblPriority" to "tblWOProirity".

Referring to FIGS. 9A-9B, the execute() method of the Field class 900 is illustrated at lines 19-36. This execute() method is responsible for effecting a single type of change (ADD FIELD, DROP FIELD or RENAME FIELD, as indicated by the action data member) to a named field of a database table whose table name is passed as an input parameter to the method. The body of this execute() method also contains a switch statement which causes a different logic branch to be executed based on the value of the action data member.

In the case of an ADD FIELD action, one or more appropriate API calls are made to DBMS 24 or commands sent to DBMS 24 for causing a new field with a name matching the value of the data member fieldname to be created in the specified table. The API calls are such that the type of the new field will match the value of the data member newtype, and the field is not permitted to have a null value if the allownull data member is set to FALSE for example. This action would be effected by Field object 112 for example to cause a field named "strCustomerName" to be added to table "tb1Customer".

In the case of a DROP FIELD action, one or more appropriate API calls are made to DBMS 24 or commands sent to DBMS 24 for causing the field with a name matching the fieldname data member value to be deleted from the relevant database table. This action would be taken by Field object 114 for example to cause the field named "strEmail2" to be dropped from table "tb1Customer".

In the case of a RENAME FIELD action, one or more appropriate API calls are made to DBMS 24 or commands sent to DBMS 24 for causing the field whose name matches the fieldname data member value to be renamed to the value of the newname data member. This action would be taken by Field object 116 for example in to rename field "strDescription" to "strWODesc".

In the present embodiment, when the "cascade" of execute() method invocations triggered by the invocation of the execute() method of the Upgrade object 102 has been completed, a value of "1.1" is returned, indicating to the calling execute() method of the Upgrades object 100 that the first incremental upgrade to v1.1 is complete. The currentVersion data member of the Upgrades object 100 will accordingly be set to 1.1, and a check may be performed to determine whether v1.1. is the desired final version. Given that V1.1 is not the desired final version in this example, the execute() method of the Upgrade object 104 is called in order to perform the next incremental upgrade from v1.1 to v1.2. This results in a similar cascade of execute() method invocations. Thus, as should now be appreciated, the desired level or degree of database upgrade determines which of the objects' 34 execute methods are invoked. When the latter cascade of invocations is completed, the database will be upgraded to v1.2, and operation terminates.

It is noted that, due to certain similarities between the four classes 600, 700, 800 and 900, these classes could implement a standard object oriented interface. The interface could for example require the definition of a fromXML() method and an execute() method, but would leave the bodies of these methods to be defined by the implementing classes. To account for the fact that the execute() method implementation in the Upgrade class takes a parameter "resultantVersion" while the implementations in the other classes do not take any parameters, the execute() method could be overloaded.

The above-described approach may be used in conjunction with a system that presents server-side applications at varied wireless communication devices, as described in U.S. Patent Publication No. US 2003/0060896 published March 27, 2003 for example. Specifically, the XML illustrated in FIG. 4 could be downloaded, interpreted and executed by a wireless communication device in order to upgrade a database used by a mobile application to present data from a server-side application. The present embodiment may typically be employed in cases where the mobile application has itself been upgraded, thereby necessitating a database upgrade. The above-described operation of database upgrade software 22 for upgrading the database could precede the execution of the upgraded mobile application at the device in order to ensure that the database structure expected to exist by the upgraded mobile application does in fact exist. Conveniently, operation of the same database upgrade software 22 on different devices having different starting database versions can update all of the databases to the same desired final version, e.g. regardless of whether the starting database version was v1.0 or v1.1. This is possible because of the logic within Upgrades class 600 which checks the current database version before determining which incremental upgrades to effect.

When database table updates are applied, they may be applied one record at a time, with old records being deleted on the fly, to avoid memory exhaustion at the wireless communication device 10.

If the database to be upgraded is stored at a wireless communication device 10 (as in the above-described embodiment), it may be advantageous to use the above described approach for upgrading the database locally at the device in lieu of alternative possible database upgrade techniques. One alternative technique may involve wireless transmission of the database contents to a server for upgrading, and then transmission of the database contents back to the wireless communication device. The latter approach can be costly, especially when the database is large. This is due to the fact that some wireless network providers charge wireless transmission or "air time" fees based on the amount of data transmitted or the amount of time spent transmitting. Operation of the present embodiment to upgrade a database locally at the device may circumvent such fees.

When it is necessary to rename a database field, the particular DBMS API calls or DBMS commands that must be specified to effect the field rename may differ from database to database. In some cases, a simple "rename" API call or command may be sufficient to rename a field. In other cases, the database may not support a simple "rename" command. Instead, it may be necessary to perform a series of "add" and "drop" API calls or commands to effect a rename. For example, it may be necessary to create a new temporary field, copy existing data into that temporary field, drop the old field, create a new field with the desired name, copy the data from the temporary field to the new field, and then drop the temporary field. The developer should be familiar with the relevant database and DBMS so that it is known which API calls and commands are available for achieving a database upgrade.

Creation of the database upgrade description document 30 may be facilitated by the use of a rapid application development (RAD) tool. A RAD tool is a computing device executing RAD software which provides an intuitive graphical user interface (GUI) facilitating "drag and drop" development of XML documents, so that even developers who lack XML knowledge may generate database upgrade description documents 30. The tool may permit the developer to create icons representative of the above-described XML elements in visual hierarchies corresponding the XML element hierarchies illustrated in the document 30 of FIG. 4. It may be possible to assign values to XML attributes through selection of an icon corresponding to an XML element and the setting of "properties" corresponding to the attributes. The database upgrade description document 30 may ultimately be generated through selection of a "publish" or similar command upon completion of the visual hierarchy. Generated database upgrade description documents 30 may be uploaded from the RAD tool to a server for eventual downloading to wireless communication device 10. Of course, it is also possible to create a database upgrade description document 30 manually through the use of a simple text editor. Of course, the use of a simple text editor would place greater responsibility on the developer for knowing the details of the associated XML schema.

As will be appreciated by those skilled in the art, modifications to the above-described embodiment can be made without departing from the essence of the invention. For example, the database upgrade description document 30 could be generated using a markup language other than XML, such as Standard Generalized Markup Language. Different element and attribute names could be used rather than those indicated above.

In some embodiments, an UPGD element could define a non-incremental, "major" upgrade that effectively "skips" interim versions. This may be the case if it is known that certain changes in successive, incremental updates are redundant (e.g. an "add" and a "drop" of the same field in different incremental upgrades) or if it is know that that only a database with a very early version number needs to be upgraded to a much later version number, and that no databases with interim version numbers that would require upgrading remain in existence. The creator of such a database upgrade description document 30 may choose to simply eliminate any redundant changes between incremental updates when creating such a document 30.

Some embodiments may have multiple database upgrade description documents. For example, each document could contain a single UPGD element. Alternatively, a single database upgrade description document 30 may in some cases contain only one UPGD element.

The code which actually interfaces with the DBMS 24 for purposes of upgrading the database may be coded within general purpose routines. These routines could form part of database upgrade software 22 and could be invoked from the execute() methods of certain ones of objects 34. This may be done, e.g., to facilitate the capacity of the software 22 to be used with different types of databases or database management systems. For example, if access to a new type of database or DBMS is desired, new general purpose routines for interacting with the DBMS (having the same signature as existing general purpose routines for interacting with the DBMS) could be substituted, and the software 22 could be otherwise unchanged.

Other modifications will be apparent to those skilled in the art and, therefore, the invention is defined in the claims.

## Claims

1. A method of performing a database upgrade at a computing device having installed database upgrade software (22) and a database management system (24), comprising:
determining a current version of a database (32);
inputting to the database upgrade software one or more markup language documents (30) containing a plurality of markup language portions, each said markup language portion describing a set of changes to the database for upgrading the database (32) from a starting version (32, 32') to a subsequent version (32', 32");
selecting one of the markup language portions for implementation based on said determining; and
executing the database upgrade software (22) to make appropriate calls to database management system (24) for implementing the set of changes to the database (32) described by the selected markup language portion,
wherein each markup language portion comprises a set of markup language elements, the set of elements including at least one instruction element representing a change to be made to said database, said instruction element including an action attribute indicating the type of change.

2. The method of claim 1 wherein said change comprises renaming a database table and wherein said instruction element further includes an attribute indicating a new name for said database table.

3. The method of claim 1 wherein said change comprises updating a database table, wherein said instruction element contains a field element representing a change to be made to a field of said database table, and wherein the field element includes an action attribute indicating the type of change to said field.

4. The method of claim 3 wherein said change to said field comprises renaming said field and wherein said field element further includes an attribute indicating a new name for said field.

5. The method of any one of claims 1 to 4 wherein said markup language portions comprise a set of markup language elements, each markup language element of said set describing any of an addition of a database table, a deletion of a database table, a renaming of a database table, or an update to the structure of a database table.

6. The method of claim 5 wherein said set of markup language elements is a first set of markup language elements and wherein said markup language portion further comprises a second set of markup language elements, each markup language element of said second set describing any of an addition of a field to a database table, a deletion of a field from a database table, or a renaming of a field within a database table.

7. The method of claim 6 wherein each markup language element of said second set is subordinate to a markup language element of said first set within said one or more markup language documents (30).

8. The method of claim 7 wherein each markup language element of said second set is a child of a markup language element of said first set.

9. The method of any one of claims 1 to 8 further comprising:
setting the current version of the database (32) to the subsequent version associated with the selected markup language portion; and
repeating said selecting, said implementing and said setting until the current version of the database (32) matches a desired final version (32") of the database.

10. A machine-readable medium (28) comprising:
machine-executable code (22) for causing a computing device (10) to perform the method of any one of claims 1 to 9.

11. A computing device (10) comprising:
at least one processor (12); and
memory (14) coupled to said at least one processor storing:
machine-executable code (22) for causing said computing device (10) to perform the method of any one of claims 1 to 9.

## Patentansprüche

1. Verfahren zur Durchführung einer Datenbank-Aktualisierung in einem Computergerät, auf dem Datenbank-Aktualisierungssoftware (22) und ein Datenbankverwaltungssystem (24) installiert sind, umfassend:
das Ermitteln einer aktuellen Version einer Datenbank (32);
das Eingeben von einem oder mehreren Auszeichnungssprache-Dokumenten (30) in die Datenbank-Aktualisierungssoftware, welche eine Mehrzahl von Auszeichnungssprache-Abschnitten enthalten, wobei jeder der Auszeichnungssprache-Abschnitte ein Set von Änderungen an der Datenbank für die Aktualisierung der Datenbank (32) von einer Startversion (32, 32') zu einer Nachfolgeversion (32', 32") beschreibt;
das Auswählen von einem der Auszeichnungssprache-Abschnitte zur Implementierung basierend auf dem Ermitteln, und
das Ausführen der Datenbank-Aktualisierungssoftware (22) zur Durchführung der geeigneten Aufrufe an das Datenbankverwaltungssystem (24), um das Set von Änderungen an der Datenbank (32) zu implementieren, das durch den ausgewählten Auszeichnungssprache-Abschnitt beschrieben ist,
wobei jeder Auszeichnungssprache-Abschnitt ein Set von Auszeichnungssprache-Elementen umfasst, das Set von Elementen mindestens ein Anweisungselement einschließt, das eine an der Datenbank durchzuführende Änderung repräsentiert, und das Anweisungselement ein Aktionsattribut einschließt, welches den Typ der Änderung angibt.

2. Verfahren gemäß Anspruch 1, wobei die Änderung das Umbenennen einer Datenbanktabelle umfasst und wobei das Anweisungselement des Weiteren ein Attribut einschließt, welches einen neuen Namen für diese Datenbanktabelle angibt.

3. Verfahren gemäß Anspruch 1, wobei die Änderung das Aktualisieren einer Datenbanktabelle umfasst, wobei das Anweisungselement ein Feldelement enthält, welches eine an einem Feld der Datenbanktabelle durchzuführende Änderung repräsentiert, und wobei das Feldelement ein Aktionsattribut einschließt, welches den Typ der Änderung an dem Feld angibt.

4. Verfahren gemäß Anspruch 3, wobei die Änderung an dem Feld das Umbenennen des Feldes umfasst und wobei das Feldelement des Weiteren ein Attribut einschließt, welches einen neuen Namen für das Feld angibt.

5. Verfahren gemäß einem der Ansprüche 1 bis 4, wobei die Auszeichnungssprache-Abschnitte ein Set von Auszeichnungssprache-Elementen umfassen, jedes Auszeichnungssprache-Element dieses Sets eines der Folgenden beschreibt: eine Hinzufügung einer Datenbanktabelle, eine Löschung einer Datenbanktabelle, eine Umbenennung einer Datenbanktabelle oder eine Aktualisierung der Struktur einer Datenbanktabelle.

6. Verfahren gemäß Anspruch 5, wobei das Set der Auszeichnungssprache-Elemente ein erstes Set von Auszeichnungssprache-Elementen ist und wobei der Auszeichnungssprache-Abschnitt des Weiteren ein zweites Set von Auszeichnungssprache-Elementen umfasst, wobei jedes Auszeichnungssprache-Element dieses zweiten Sets eines der Folgenden beschreibt: eine Hinzufügung eines Feldes zu einer Datenbanktabelle, eine Löschung eines Feldes aus einer Datenbanktabelle oder eine Umbenennung eines Feldes in einer Datenbanktabelle.

7. Verfahren gemäß Anspruch 6, wobei jedes Auszeichnungssprache-Element des zweiten Sets einem Auszeichnungssprache-Element des ersten Sets innerhalb des einen oder der mehreren Auszeichnungssprache-Dokumente (30) untergeordnet ist.

8. Verfahren gemäß Anspruch 7, wobei jedes Auszeichnungssprache-Element des zweiten Sets ein Tochterelement eines Auszeichnungssprache-Elements des ersten Sets ist.

9. Verfahren gemäß einem der Ansprüche 1 bis 8, des Weiteren umfassend:
das Festlegen der aktuellen Version der Datenbank (32) auf die Nachfolgeversion, die dem ausgewählten Auszeichnungssprache-Abschnitt zugeordnet ist; und
das Wiederholen des Auswählens, des Implementierens und des Festlegens, bis die aktuelle Version der Datenbank (32) mit einer gewünschten endgültigen Version (32") der Datenbank übereinstimmt.

10. Maschinenlesbares Medium (28), umfassend:
maschinenausführbaren Code (22), der bewirkt, dass ein Computergerät (10) das Verfahren gemäß einem der Ansprüche 1 bis 9 ausführt.

11. Computergerät (10), umfassend:
mindestens einen Prozessor (12) und
Speicher (14), der mit dem mindestens einen Prozessor gekoppelt ist, zum Speichern von:
maschinenausführbarem Code (22), der bewirkt, dass das Computergerät (10) das Verfahren gemäß einem der Ansprüche 1 bis 9 ausführt.

## Revendications

1. Procédé permettant de mettre à niveau une base de données sur un dispositif informatique disposant d'un logiciel de mise à niveau de base de données (22) et un système de gestion de base de données (24), comprenant les étapes suivantes :
définition de la version actuelle d'une base de données (32) ;
entrée, dans le logiciel de mise à niveau de base de données, d'un ou plusieurs documents de langage de balisage (30) contenant une pluralité de parties de langage de balisage, chacune desdites parties de langage de balisage décrivant un ensemble de changements à apporter à la base de données afin de mettre la base de données (32) à niveau, d'une version de départ (32, 32') à une version ultérieure (32', 32") ;
sélection de l'une des parties de langage de balisage à mettre en oeuvre en fonction de ladite définition ; et
exécution du logiciel de mise à niveau de base de données (22) pour passer les appels appropriés au système de gestion de base de données (24) afin de mettre en oeuvre l'ensemble de changements à apporter à la base de données (32) décrit par la partie de langage de balisage sélectionnée,
dans lequel chaque partie de langage de balisage comprend un ensemble d'éléments de langage de balisage, l'ensemble d'éléments comprenant au moins un élément d'instruction représentant un changement à apporter à ladite base de données, ledit élément d'instruction incluant un attribut d'action indiquant le type de changement.

2. Procédé selon la revendication 1, dans lequel ledit changement comprend le renommage d'une table de base de données et dans lequel ledit élément d'instruction inclut en outre un attribut indiquant un nouveau nom pour ladite table de base de données.

3. Procédé selon la revendication 1, dans lequel ledit changement comprend la mise à jour d'une table de base de données, dans lequel ledit élément d'instruction contient un élément de champ représentant un changement à apporter à un champ de ladite table de base de données et dans lequel l'élément de champ inclut un attribut d'action indiquant le type de changement à apporter audit champ.

4. Procédé selon la revendication 3, dans lequel ledit changement à apporter audit champ comprend le renommage dudit champ et dans lequel ledit élément de champ inclut en outre un attribut indiquant un nouveau nom pour ledit champ.

5. Procédé selon l'une quelconque des revendications 1 à 4, dans lequel lesdites parties de langage de balisage comprennent un ensemble d'éléments de langage de balisage, chaque élément de langage de balisage dudit ensemble décrivant une action quelconque parmi l'ajout d'une table de base de données, la suppression d'une table de base de données, le renommage d'une table de base de données ou la mise à jour de la structure d'une table de base de données.

6. Procédé selon la revendication 5, dans lequel ledit ensemble d'éléments de langage de balisage est un premier ensemble d'éléments de langage de balisage et dans lequel ladite partie de langage de balisage comprend en outre un deuxième ensemble d'éléments de langage de balisage, chaque élément de langage de balisage dudit deuxième ensemble décrivant une action quelconque parmi l'ajout d'un champ à une table de base de données, la suppression d'un champ d'une table de base de données ou le renommage d'un champ dans une table de base de données.

7. Procédé selon la revendication 6, dans lequel chaque élément de langage de balisage dudit deuxième ensemble est subordonné à un élément de langage de balisage dudit premier ensemble dans ledit un ou lesdits plusieurs documents de langage de balisage (30).

8. Procédé selon la revendication 7, dans lequel chaque élément de langage de balisage dudit deuxième ensemble est un enfant d'un élément de langage de balisage dudit premier ensemble.

9. Procédé selon l'une quelconque des revendications 1 à 8, comprenant en outre les étapes suivantes :
le réglage de la version actuelle de la base de données (32) sur la version ultérieure associée à la partie de langage de balisage sélectionnée ; et
la répétition desdites étapes de sélection, mise en oeuvre et réglage jusqu'à ce que la version actuelle de la base de données (32) corresponde à une version finale souhaitée (32 ") de la base de données.

10. Support lisible en machine (28), comprenant :
un code (22) pouvant être exécuté par une machine et amenant un dispositif informatique (10) à mettre en oeuvre le procédé selon l'une quelconque des revendications 1 à 9.

11. Dispositif informatique (10), comprenant :
au moins un processeur (12) ; et
une mémoire (14) couplée audit au moins un processeur stockant :
un code (22) pouvant être exécuté par une machine et amenant ledit dispositif informatique (10) à mettre en oeuvre le procédé selon l'une quelconque des revendications 1 à 9.
